(19) Europäisches Patentamt
European Patent Office
Office européen des brevets

(11) **EP 2 801 475 A1**

(12) **EUROPEAN PATENT APPLICATION**

(43) Date of publication:
**12.11.2014 Bulletin 2014/46**

(21) Application number: **13166620.8**

(22) Date of filing: **06.05.2013**

(51) Int Cl.:
**B32B 15/08** *(2006.01)*    **B32B 15/20** *(2006.01)*
**B32B 27/30** *(2006.01)*    **B32B 27/32** *(2006.01)*
**B32B 27/36** *(2006.01)*    **B32B 1/02** *(2006.01)*
**B32B 3/28** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **AGFA-GEVAERT**
**2640 Mortsel (BE)**

(72) Inventor: **Depla, Anouschka**
**2640 Mortsel (BE)**

(74) Representative: **Viaene, Kris**
**Agfa-Gevaert N.V.**
**IP Department 3622**
**Septestraat 27**
**2640 Mortsel (BE)**

(54) **Novel blister pack for pharmaceuticals**

(57)    A novel transparent blister pack for pharmaceuticals is disclosed wherein the blister is made from an aluminium based laminate and the lidding foil from a transparent barrier film. The novel transparent blister has superior barrier properties. The novel transparent blister can be made completely halogen free.

FIGURE 1: A schematic representation of an embodiment of a blister pack according to the present invention.

## Description

FIELD OF THE INVENTION

The present invention relates to a novel blister pack for pharmaceuticals.

BACKGROUND OF THE INVENTION

A "blister pack" covers several types of pre-formed plastic packaging used for consumer goods, food and pharmaceuticals. The primary component of a blister pack is a cavity, often referred to as "pocket" or "blister", holding the product. The blisters holding the product are then sealed by a lidding foil.

When used for pharmaceuticals, blister packs are designed to protect the product from the environment (moisture, $O_2$, light) to guarantee physical and chemical stability of the product. The type of material used to prepare the blister pack determines its "barrier" properties against water vapour, oxygen, light, etc.

A blister pack with the highest protection against the environment has a lidding foil and a blister both based on aluminium. A major disadvantage of such a so-called cold formed blister pack is the lack of transparency.

Most blister packs however have an aluminium based lidding foil and a transparent blister. Such a so-called thermoformed blister is obtained by thermoforming a flat, transparent plastic film. Such a blister has the advantage of transparency. However, given the fact that a transparent plastic film has to be thermoformed to form the blister limits the choice of transparent polymer films that can be used for that purpose. For that reason barrier films having superior barrier properties, for example those based on composite materials, or certain halogen free plastic films, such as for example biaxially oriented polyester films, are not suitable to form a transparent blister.

SUMMARY OF THE INVENTION

It is an object of the present invention to provide a transparent blister pack having superior barrier properties.

It is another object of the present invention to provide a halogen free, transparent blister pack.

Both objects are realized by the blister pack as defined in claim 1.

Further objects of the invention will become apparent from the description hereinafter and the dependent claims.

BRIEF DESCRIPTION OF THE DRAWING

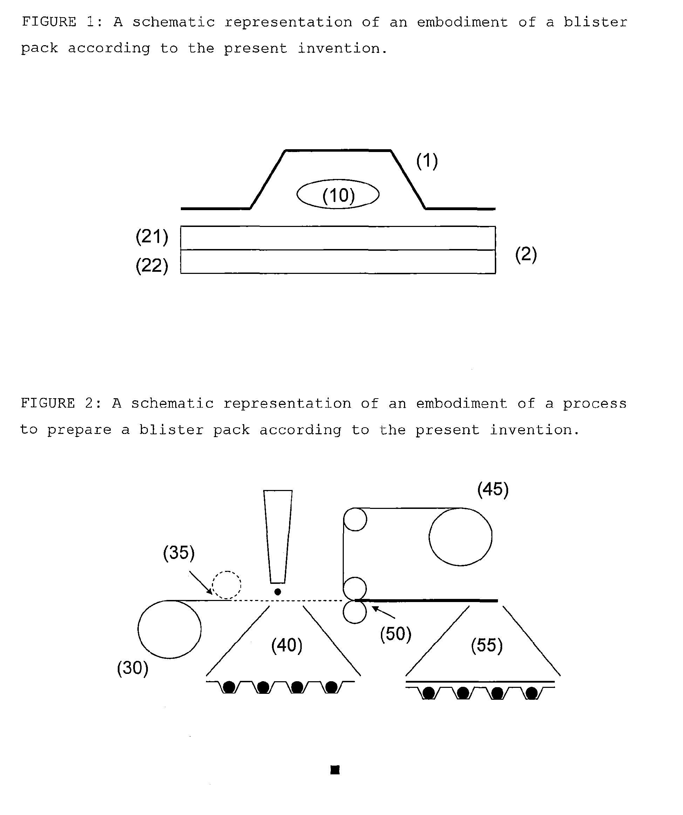

FIGURE 1 shows a schematic representation of an embodiment of a blister pack according to the present invention.

FIGURE 2 shows a schematic representation of an embodiment of a process to prepare a blister pack according to the present invention.

DETAILED DESCRIPTION OF THE INVENTION

A blister pack according to the present invention comprises a cavity forming foil (1) an a lidding foil (2) **characterized in that** the cavity forming foil comprises an aluminium-based laminate film and the lidding foil is a transparent barrier film.

Transparent barrier film

The lidding foil of the blister pack according to the present invention is a transparent barrier film.

The barrier film has preferably a Total Light Transmission (TLT), measured according to ASTM D1300, of at least 75 %, more preferably of at least 80 %, most preferably of at least 85 %.

The barrier film comprises of a substrate (22) and optional barrier layers (21) provided thereon. In one embodiment of the lidding foil, the substrate, or a layer on the substrate, is adjacent to the pharmaceutical while a barrier layer is the outer layer. In another embodiment of the lidding foil, a barrier layer, or a layer on the a barrier layer, is adjacent to the pharmaceutical while the substrate is the outer layer.

Substrate

The substrate may be a polyvinylchloride (PVC) substrate, or a substrate based on copolymers made of vinyl chloride units and of one or more other monomers (VC copolymers). PVC is the most widely used substrate in blister packs. The main advantages of PVC are its low cost price and its very good processability. The main disadvantages are its poor barrier properties and a negative environmental connotation due to its chlorine content.

The substrate is preferably a halogen free polymeric film. Preferred halogen free polymeric films are made from polyesters, polyolefins, polyamides, polyacrylonitrile, or copolymers made of acrylonitrile units and one or more other monomers.

The polyester is preferably polyethylene terephthalate (PET) or copolymers made of ethylene terephthalate units and one or more other monomers. The PET may be amorphous (APET) or crystalline. The latter can be used in the blister pack of the present invention because it the substrate does not have to be thermoformable. Such a crystalline PET may be for example biaxially oriented PET (BOPET). Another preferred polyester is PETG, a polyester copolymer composed of ethylene terephthalate units and cyclohexanedimethanol units.

Preferred polyolefins are polypropylene (PP), polyethylene (PE), cyclo-olefin copolymers (COCs), and cyclo-olefin polymers (COP).

Substrates based on polylactic acid may also be used in view of their biodegradability. Polyethylenefuranoate (PEF) substrates may also be of interest as they are 100 % biobased and recyclable.

The thickness of the substrate is preferably between 10 and 1000 μm, more preferably between 50 and 500 μm, most preferably between 190 and 350 μm.

The substrate may be surface treated, typically to enhance the adhesion between the substrate and layers provided thereon.

Examples of such a surface treatment include a corona discharge treatment, a flame treatment, a UV treatment, a low pressure plasma treatment, and an atmospheric plasma treatment. A preferred surface treatment is a corona discharge treatment.

Barrier layers

To further improve the barrier properties of the transparent lidding foil, one or more barrier layers may be provided on the substrate.

These layers may be provided on the substrate by laminating one or more barrier films or sheets on the substrate, by coating one or more barrier coating on the substrate, by coextrusion of two or more barrier layersor, or by any other technique.

Widely used barrier layers are based on halogen containing polymers such as polyvinylidene chloride (PVDC) or polychlorotrifluoro ethylene (PCTFE).

PVDC is a vinylidene polymer selected from the group consisting of polyvinylidene chloride and copolymers made of vinylidene chloride units and other monomers (VCD copolymers). A preferred PVDC is a vinylidene chloride - methyl acrylate copolymer.

PVDC is typically coated from aqueous latex dispersions. Such latex dispersions are commercially available, for example from Solvay Plastics (Diofan® A736, Diofan® 193D and Diofan® Super B), from Asahi Kasei Chemicals (L801, L803, L803C, L817B), and from Dow Chemical (Serfene® 195).

A PVDC based barrier coating has the advantage that it exhibits good barrier properties not only with respect to oxygen but also with respect to water vapor.

The dry weight of a PVDC coating on a substrate is usually from 40 up to 180 $g/m^2$ PVDC, depending on the barrier properties strived for. Such PVDC coatings are typically coated from aqueous latex dispersions and dried at high temperatures (70-130°C) and low relative humidities (RH < 5%). Under such drying conditions, the maximum dry coating weight in one single pass is limited to ± 17 $g/m^2$ PVDC. To achieve a final dry coating weight of for example 180 $g/m^2$ PVDC, 10 or more repetitive coating/drying steps are necessary. This implies several passes through an industrial coating alley.

The method disclosed in the unpublished EP-A 12198387.8 (filed on 20-12-2012) makes it possible to realize higher dry coating weights (DCW) of PVDC in a single pass.

In that preferred method a single layer of at least 20 $g/m^2$ of PVDC latex is coated on a substrate and dried at a dry temperature ($T_d$) of at least the film formation temperature ($T_f$) of the PVDC latex at a relative humidity (RH) according to the following formula:

$$RH = 15 + 1.25 * DCW.$$

PCTFE based films are laminated on a substrate. PCTFE films are prepared by polymerization of chlorotrifluoroethylene (CTFE). Again, the thickness of the PCTFE film determines the barrier properties. They have higher barrier properties, especially against moisture, compared with PVDC based films. Commerically available PCTFE films are for example the ACLAR® films from Honeywell.

When using PCTFE films as blister forming foils, the thickness of the PCTFE, and as a consequence its barrier properties, are limited because the flexbility of such thick PCTFE becomes insufficient to (thermo) form the blisters. The thickness of PCTFE films is typically between 15 and 152 μm. PCTFE films having a thickness of more than 50 μm already have an insufficient flexibility to form blisters. The flexibility of "thick" PCTFE films can be improved by a PE layer of 20 - 50 μm located between the support and the PCTFE film. In a blister pack according to the present invention, because the PCTFE film is now used as (flat) lidding foil, the limited flexibility of thick PCTFE films are no longer an issue. Therefore, blister packs with superior barrier properties while maintaining the advantage of transparancy are feasable.

The flexibility issue of thick barrier films when used as blister forming foils is not only a problem for PCTFE films, but also for other barrier films.

PCTFE based films may be combined with other films to further improve the barrier properties. For example the commercially available ACLAR®/BAREX® laminate may be provided on the substrate, resulting in very good barrier properties against both moisture and oxygen. BAREX® films contain resins which are produced by copolymerization of acrylonitrile and methyl acrylate in a 75:25 ratio onto a nitrile rubber backbone.

The BAREX® film component for such laminates is available from Klockner Pentaplast America, Plastiques Venthenat, and Innovative/Greenway Plastics. To improve the adhesion between both components, an adhesive may be used.

A PCTFE film may also be combined with a PVDC layer. For example, a PVDC layer may be coated on a substrate, followed by laminating a PCTFE film on the dried PVDC layer. Such a barrier film is disclosed in US2011/0210037.

Halogen free barrier layers are preferably used in the present invention. When combined with a halogen free substrate, the blister pack of the present invention is completely halogen free.

Such a halogen free barrier layer may be based on ethylene vinyl acetate copolymers, such as for example the Exceval™ polymers available from Kuraray. Such Exceval™ polymers are water soluble ethylene vinyl acetate copolymers with varying degrees of hydrolysis and ethylene contents. Barrier layers containing such Exceval™ polymers may be coated from aqueous solutions.

A halogen free barrier film may also be based on acrylic resins, such as for example VaporCoat® from Michelman.

Many halogen free barrier films are based on nanocomposites.

For example the NanoSeal™ - Bairicade™ XT Barrier Coating (BXT-50) and NanoSeal™ - Barrier coating (NSC-60PL) from NanoPack are water based barrier coatings comprising clay platelets.

The SunBar™ 1.1 Oxygen Barrier Coating (from Sun Chemicals), a two parts blendable coating and also containing clay platelets, may also be used to form a barrier film.

NanoLok™ WR 301409 from InMat, an aqueous suspension of nano-dispersed silicate and polyurethane resin, may also be used to form a transparent barrier film.

The MicroLite® vermiculite dispersions from Grace characterized by high aspect ratio vermiculate platelets provides high barrier properties to aqueous coatings. The NanoShield® barrier films of Filquest are also based on vermiculate nano platelets.

Ormocer®s are inorganic-organic hybrid polymers whose properties can be varied almost at liberty. These hybrid polymers have been developed by The Fraunhofer ISC and their preparation is based on a modified sol-gel process. Barrier coating may be obtained using such Ormocer® polymers.

The Aquamica® barrier coatings from AZ Electronic Materials are based on polysilazanes, i.e. polymers in which silicon and nitrogen atoms alternate in the basic backbone.

Barrier coatings based on the so called Dyad technology may also be used in the present invention. "Dyad" refers to a pair of layers comprising adjacent organic and inorganic coatings. Such barrier coatings are for example Barix multilayers from Vitex, barrier films from Tera-Barrier Films, and the Terraflex-F Gloss Coating G 11/182 from Actega.

Other layers

The transparent lidding foil may, besides the substrate and the optional barrier layer, also comprise additional layers to further optimize its properties.

For example, an "anchor coating" or primer may be applied on the substrate to improve the adhesion between the barrier layer(s) and the substrate. Such a primer is preferably coated from an aqueous coating solution. Such primers typically comprise one or more binders, such as for example polyurethanes, polyacrylics, and polyesters. A preferred primer is a polyurethane based primer.

The lidding foil may comprise an ink accepting layer to render the foil printable. Such a layer typically contains a polymeric binder and porous inorganic particles. Printing can be carried out by letterpress, gravure, offset, flexographic, silk-screen or inkjet printing processes.

A sealing layer may be provided to ensure a good adhesion between the lidding foil and the blister forming aluminium based laminate. Conventional heat seal coatings may be used in the present invention.

Blister

In the blister pack according to the present invention, the cavity or blister forming foil comprises an aluminium-based laminate film.

Unlike all plastic blisters, such alumunium based blisters are not thermoformed but instead cold-pressed into shape. Such a aluminium based foil is typically referred to as a cold-formable foil (CFF). During the cold-forming process, the CFF is shaped and molded around a plug to form a cavity. Such a CFF provides almost 100 % barrier to moisture, oxygen and light.

Because an aluminium foil has an elongation percentage of only 15 to 18 %, a monolayer cold-formable foil (CFF) cannot be formed without cracking. Consequently, the aluminium foil is laminated in a sandwich between two polymers films. The aluminium-based laminate typically contains in this order a plastic film, an adhesive, an aluminium foil, an adhesive, and an outer plastic film.

The aluminium foil usually consists of several very thin layers rather than a single thick one. The multiple layers help ensure that pinholes do not go all the way through the foil. They also increase the stretchability of the foil and facilitate the cold-stretching process. Special grades of aluminium have been developed for cold forming. These are designed to stretch and form more easily than conventional grades.

A preferred structure of an aluminium-based laminate film is OPA/adhesive/aluminium/adhesive/PVC (OPA is biaxially oriented polyamide).

OPA is used primarily for its forming capabilities. It enhances the forming process due to its elasticity and it enables the formation of steep blisters allowing a high blister density to reduce blister size and material usage.

As adhesive, it is preferred to use a polyurethane based adhesive.

PVC is used for two reasons. First, it is commonly used as the contact layer and seal-to layer on pharmaceutical blisters. The second reason is that PVC is very stiff, and does not tend to shrink or spring back during cold forming. Once the cold-forming process is complete, the PVC helps the cavity to hold its shape.

An example of such an aluminium-based laminate film is for example the Alublis® laminate from SVAM Packaging Ind.

Preparation of the blister pack

A blister pack is typically made by a highly automated process. In a state of the art blister equipment, two foils are used: the foil in which the blisters are made (the lower web) and the foil used as lidding foil to seal the blisters containing the pharmaceutical product (the upper web). For the blister pack according to the present invention, the foil in which the blisters are cold-formed is the aluminium based foil (30). First, the blisters are formed in the alumunium based foil(35) by shaping and molding the foil around a plug to form the blister cavity. Then, the pharmaceutical is deposited into the blisters formed (40). The transparent lidding foil (45) then seals the blisters (50), resulting in a blister pack according to the present invention (55). Most new blister equipment has the ability to use both thermoforming and cold-forming foils. Older thermoforming equipment may require the addition of a cold-forming module. Manufactures include Uhlman Pac-Systeme GmbH&Co, KG, Marchesine Group S.p.a, IMA S.p.a, Romaco and Korber AG.

Blister packs can be opened in several ways. Access to the medicament packed in a blister can be given via push-through wherein the consumer must use a finger to push against the blister until the medicament is pressed against and breaks through the lidding foil.

In the "peel-push" type of blister package, the consumer must first peel away an upper layer of the lidding foil, and then push against the blister until the medicament is pressed against and breaks through the remaining layers of the lidding foil. The "peel-push" type package is considered more child-proof than the strictly push-through type due to the extra layer of the lidding foil that has to be removed first.

Another way to open a blister pack is using the tear-open mechanism, wherein the complete lidding foil is removed from the blister, given access to the medicament. The latter two methods require the proper selection of suitable sealants and adequate finishing (for example the presence of a notch to remove the lidding foil or the upper layer of the lidding foil).

The latter two methods may be implemented for child-proof reasons, or may become necessary when the transparent lidding foil according to the present invention is hard to break by a push-through mechanism.

**Claims**

1. A blister pack comprising a cavity forming foil (1) an a lidding foil (2) **characterized in that** the cavity formed foil comprises an aluminium-based laminate film and the lidding foil is a transparent barrier film.

2. The blister pack according to claim 1 wherein the transparent barrier film has a Total Light Transmission (TLT), measured according to ASTM D1300, of at least 80 %.

3. The blister pack according to claim 1 or 2 wherein the transparent barrier film comprises a substrate (22) and optionally one or more barrier layers (21) provided on the substrate.

4. The blister pack according to claim 3 wherein the barrier layer is a PCTFE film having a thickness of at least 50 $\mu$m.

5. The blister pack according to claim 3 wherein the barrier layer is a PVDC layer having a dry coating weight between 40 and 180 g/m$^2$.

6. The blister pack according to any of the claims 3 to 5 wherein the substrate is a halogen free substrate.

7. The blister pack according to claim 6 wherein the substrate is a polyester substrate.

8. The blister pack according to claim 7 wherein the polyester substrate is a biaxially oriented polyethyleneterephtalate (BOPET) substrate.

9. The blister pack according to any of the claims 5 to 8 wherein the barrier layers are halogen free.

10. The blister pack according to any of the preceding claims wherein the transparent barrier film is halogen free.

11. A process to prepare a blister pack as defined in claims 1 to 10 comprising the steps of:

   - cold-forming blisters (35) in an aluminium based foil (30),
   - depositing a pharmaceutical product into the cold-formed blisters (40),
   - sealing the blisters containing the pharmaceutical product (50) with a transparent lidding foil (45). ∎

FIGURE 1: A schematic representation of an embodiment of a blister pack according to the present invention.

FIGURE 2: A schematic representation of an embodiment of a process to prepare a blister pack according to the present invention.

Europäisches
Patentamt

European
Patent Office

Office européen
des brevets

## EUROPEAN SEARCH REPORT

Application Number

EP 13 16 6620

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/148321 A2 (TIMESTRIP UK LTD [GB]; KAGAN MICHAEL [IL]; MIRSKY VLADIMIR [DE]; WOLFB) 27 December 2007 (2007-12-27) * page 13, paragraph 3 - paragraph 4 * ----- | 1,3 | INV. B32B15/08 B32B15/20 B32B27/30 B32B27/32 |
| X | WO 2010/139409 A1 (AMCOR FLEXIBLES KREUZLINGEN [CH]; NAEGELI HANS RUDOLF [CH]) 9 December 2010 (2010-12-09) | 1-3,6-8 | B32B27/36 B32B1/02 B32B3/28 |
| Y | * page 1, line 4 - line 9 * * page 4, line 4 - line 18 * * page 2, line 24 - line 28 * * page 4, line 20 - line 25 * * claim 9 * ----- | 4,5,9-11 | |
| Y,D | US 2011/210037 A1 (MUENSTER JOCHEN [CH] ET AL) 1 September 2011 (2011-09-01) * page 3, paragraph 58 - page 4 * * table 1 * ----- | 4,5 | |
| Y | EP 2 090 527 A1 (ALCAN TECH & MAN LTD [CH]) 19 August 2009 (2009-08-19) * page 4, paragraph 23 * * page 4 - page 5; example 3 * ----- | 5,9,10 | TECHNICAL FIELDS SEARCHED (IPC) B32B |
| Y | EP 0 905 042 A1 (ALUSUISSE LONZA SERVICES AG [CH]) 31 March 1999 (1999-03-31) * paragraphs [0027], [0038] * * paragraph [0040] - paragraph [0041] * ----- | 11 | |

The present search report has been drawn up for all claims

| Place of search | Date of completion of the search | Examiner |
|---|---|---|
| The Hague | 26 August 2013 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 801 475 A1**

## ANNEX TO THE EUROPEAN SEARCH REPORT
## ON EUROPEAN PATENT APPLICATION NO.

EP 13 16 6620

26-08-2013

| Patent document cited in search report | | | Publication date | Patent family member(s) | | | Publication date |
|---|---|---|---|---|---|---|---|
| WO 2007148321 | A2 | | 27-12-2007 | EP | 2035796 | A2 | 18-03-2009 |
| | | | | GB | 2452455 | A | 04-03-2009 |
| | | | | US | 2010020846 | A1 | 28-01-2010 |
| | | | | WO | 2007148321 | A2 | 27-12-2007 |
| WO 2010139409 | A1 | | 09-12-2010 | CH | 701216 | A2 | 15-12-2010 |
| | | | | WO | 2010139409 | A1 | 09-12-2010 |
| US 2011210037 | A1 | | 01-09-2011 | CN | 102202986 | A | 28-09-2011 |
| | | | | DE | 102008056123 | A1 | 12-05-2010 |
| | | | | EP | 2344401 | A1 | 20-07-2011 |
| | | | | JP | 2012507410 | A | 29-03-2012 |
| | | | | US | 2011210037 | A1 | 01-09-2011 |
| | | | | WO | 2010051960 | A1 | 14-05-2010 |
| EP 2090527 | A1 | | 19-08-2009 | NONE | | | |
| EP 0905042 | A1 | | 31-03-1999 | NONE | | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 12198387 A

- US 20110210037 A